# EUROPEAN PATENT APPLICATION

(11) **EP 4 722 655 A1**
(43) Date of publication of application: **08.04.2026**
(21) Application number: 24814888.4
(22) Date of filing: 22.02.2024
(51) Int. Cl.: G01C 21/34, G01C 21/26

(54) **ROUTE DETERMINATION METHOD, ROUTE DETERMINATION DEVICE, AND PROGRAM**

(30) Priority: 02.06.2023 JP 2023091615
(71) Applicant: Panasonic Intellectual Property Management Co., Ltd., Kadoma-shi, Osaka 571-0057 (JP)
(72) Inventor: KOUNO, Yoshinobu, Kadoma-shi, Osaka 571-8501 (JP); YAMAGUCHI, Takahiro, Kadoma-shi, Osaka 571-8501 (JP); TASAKI, Hajime, Kadoma-shi, Osaka 571-8501 (JP)
(74) Representative: Grünecker Patent- und Rechtsanwälte PartG mbB
(86) International application number: PCT/JP2024/006654
(87) International publication number: WO 2024/247401

(57) **Abstract**

A route determination method, a route determination device, and a program capable of determining a route in which an electric vehicle can be safely charged are provided. A route determination device of the present disclosure includes a travel request reception unit, a trust score acquisition unit, a first route determination unit, and a route information acquisition unit. The travel request reception unit is configured to receive a travel request for requesting a travel of an electric vehicle, the travel including one or more destinations and passing through the one or more destinations. The trust score acquisition unit is configured to acquire trust scores of a plurality of charging stations from a trust score storage unit. The first route determination unit is configured to determine a route of the electric vehicle passing through the one or more destinations included in the travel request and one or more of the charging stations based on the trust score acquired by the trust score acquisition unit, when the travel request is received by the travel request reception unit. The route information output unit is configured to output route information indicating the route of the electric vehicle, the route determined by the first route determination unit.

## Description

### TECHNICAL FIELD

The present disclosure relates to a route determination method, a route determination device, and a program.

### BACKGROUND ART

In recent years, fossil fuel vehicles have been shifting to electric vehicles because of a high environmental load. Electric vehicles have a shorter travelable distance than fossil fuel vehicles and thus need to be charged while traveling. For example, in an electric vehicle for business use, there is known a technique of determining a route in consideration of power consumption of the electric vehicle when determining a route (traveling route, for example, a package delivery route) in consideration of charging time or a position of a charging point.

### CITATION LIST

### Patent Literature

Patent Document 1: WO 2022/018937 A

### SUMMARY OF INVENTION

### PROBLEM TO BE SOLVED BY THE INVENTION

However, in the prior art, the safety of the charging station is not considered in determination of the route of the electric vehicle, and thus, in a charging station to which the electric vehicle is scheduled to supply power, there is a possibility that a problem such as power supply stopping or a power supply time delay due to, for example, hacking or malfunction of the charging station occurs, and charging cannot be performed safely.

An object of the present disclosure is to provide a route determination method, a route determination device, and a program capable of determining a route through which an electric vehicle can be safely charged.

### MEANS FOR SOLVING PROBLEM

In order to achieve the above object, a route determination method according to the present disclosure is a route determination device including: a travel request reception unit configured to receive a travel request for requesting a travel of an electric vehicle, the travel including one or more destinations and passing through the destination; a trust score acquisition unit configured to acquire trust scores of a plurality of charging stations that are facilities configured to charge the electric vehicle from a trust score storage unit storing the trust scores of the plurality of charging stations; a first route determination unit configured to determine a route of the electric vehicle passing through the destination included in the travel request and one or more of the charging stations based on the trust score acquired by the trust score acquisition unit, when the travel request is received by the travel request reception unit; and a route information output unit configured to output route information indicating the route of the electric vehicle, the route determined by the first route determination unit.

### EFFECT OF THE INVENTION

According to the present disclosure, it is possible to determine a route through which an electric vehicle can be safely charged. Note that the effects described herein are not necessarily limited and may be any of the effects described in the present specification.

### BRIEF DESCRIPTION OF DRAWINGS

FIG. 1 is a diagram illustrating an example of a schematic configuration of a delivery system according to an embodiment;
FIG. 2 is a diagram illustrating an example of a hardware configuration of the route determination device according to the embodiment;
FIG. 3 is a diagram illustrating an example of functions of the route determination device according to the embodiment;
FIG. 4 is a diagram illustrating an example of a trust score determination table according to the embodiment;
FIG. 5 is a diagram illustrating an example of a relationship between trust score and a weight of each of a plurality of evaluation items configuring evaluation based on an SBOM according to the embodiment;
FIG. 6 is a diagram illustrating an example of correspondence relationships between scores indicating evaluations regarding risks and trust score according to the embodiment;
FIG. 7 is a diagram illustrating an example of a determination table for obtaining a score of a risk according to the embodiment;
FIG. 8 is a diagram illustrating an example of the SBOM according to the embodiment;
FIG. 9 is a diagram illustrating an example of correspondence relationships between scores indicating evaluations regarding vulnerability and trust score according to the embodiment;
FIG. 10 is a diagram illustrating an example of correspondence relationships between scores indicating evaluations regarding licenses of the embodiment and trust score;
FIG. 11 is a diagram illustrating an example of a determination table for obtaining scores of licenses of the embodiment;
FIG. 12 is a diagram illustrating an example of correspondence information indicating correspondence relationships between evaluation criteria of evaluations regarding charging time and evaluations regarding standby time and trust score according to the embodiment;
FIG. 13 is a diagram illustrating an example of correspondence information indicating a correspondence relationship between evaluation criteria of the evaluations based on reviews of registered members and evaluations based on reviews of unregistered members of the embodiment and the trust score;
FIG. 14 is a diagram illustrating an example of correspondence information indicating correspondence relationships between ranks and trust score according to the embodiment;
FIG. 15 is a diagram illustrating an example of charging station trust score information according to the embodiment;
FIG. 16 is a diagram illustrating an example of a route determination method according to the embodiment;
FIG. 17 is a flowchart illustrating an operation example of the route determination device according to the embodiment;
FIG. 18 is a diagram illustrating an example of a route determination method according to a modification;
FIG. 19 is a diagram illustrating an example of functions of a route determination device according to the modification;
FIG. 20 is a diagram illustrating an example of the route determination method according to the modification; and
FIG. 21 is a flowchart illustrating an operation example of the route determination device according to the modification.

### DESCRIPTION OF EMBODIMENTS

Hereinafter, a route determination method, a route determination device, and a program according to an embodiment of the present disclosure are described in detail with reference to the accompanying drawings.

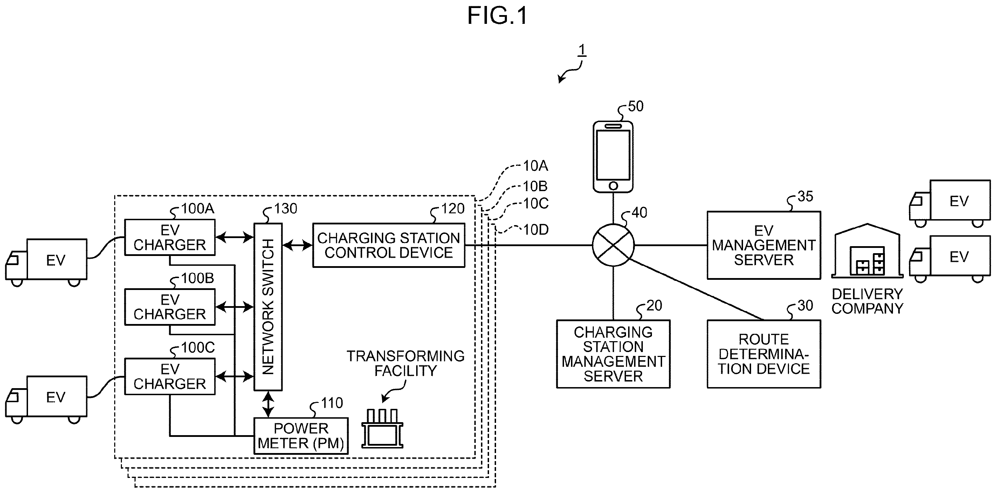

FIG. 1 is a diagram illustrating an example of a schematic configuration of a delivery system 1 that delivers a package using an electric vehicle (hereinafter, referred to as an "electric vehicle (EV)") according to the present embodiment. As illustrated in FIG. 1, the delivery system 1 includes a plurality of charging stations 10A to 10D, a charging station management server 20, a route determination device 30, and an EV management server 35. In FIG. 1, the four charging stations 10A to 10D are illustrated, but the present invention is not limited thereto, and the number of charging stations 10 included in the delivery system 1 can be arbitrarily changed according to design conditions and the like. In the following description, the charging stations 10A to 10D are simply referred to as "charging stations 10", when not distinguished from each other.

In the example of FIG. 1, the charging station 10, the charging station management server 20, the route determination device 30, and the EV management server 35 can be connected to each other via a network 40 such as the Internet. Furthermore, a terminal 50 (for example, may be a mobile terminal such as a smartphone or a stationary terminal such as a desktop PC) possessed by the user can also be connected to the network 40.

Hereinafter, specific contents of the charging station 10, the charging station management server 20, the route determination device 30, and the EV management server 35 included in the delivery system 1 are described.

First, the charging station 10 is described. The charging station 10 is a facility that charges (supplies power) the EV. As illustrated in FIG. 1, the charging station 10 includes a plurality of EV chargers 100A to 100C, a power meter 110, and a charging station control device 120. In the following description, the plurality of EV chargers 100A to 100C are simply referred to as "EV chargers 100", when not distinguished from each other. The EV charger 100, the power meter 110, and the charging station control device 120 are connected to a network such as a local area network (LAN) via a network switch 130 and can exchange data with each other.

The EV charger 100 is a device that charges the battery of the EV using the electric power transformed by the transforming facility. The transforming facility transforms high-voltage power generated by a power plant or the like into power for charging the EV. Note that, in the present embodiment, the transforming facility is installed in the charging station 10, but the present invention is not limited thereto, and for example, the transforming facility may be installed outside the charging station 10. That is, the transforming facility may be installed at any place and may be installed in the charging station 10 or may be installed outside the charging station 10.

The power meter 110 (PM) is a device that measures the power supplied from the transforming facility to the EV charger 100. That is, the power meter 110 is a device that measures the amount of power used for charging the EV by the EV charger 100.

The charging station control device 120 is a device (for example, a site controller (SC)) that integrally controls the charging station 10. For example, the charging station control device 120 can acquire software configuration information of each of the EV charger 100, the power meter 110, and the charging station control device 120 and transmit the acquired software configuration information to the charging station management server 20. The software configuration information is information indicating a configuration of software, and in the present embodiment, the software configuration information is a software bill of materials (SBOM) including components that configure the software, dependency between the components, versions, license information, and the like. Specific contents of the SBOM are described below.

For example, each time the SBOMs of EV charger 100, the power meter 110, and the charging station control device 120 are updated, the charging station control device 120 can transmit the updated SBOMs to the charging station management server 20. Otherwise, each time a certain period elapses, the SBOMs of the EV charger 100, the power meter 110, and the charging station control device 120 can be transmitted to the charging station management server 20.

Next, the charging station management server 20 is described. The charging station management server 20 is a device that manages the plurality of charging stations 10 included in the delivery system 1 and manages information such as the SBOMs received from the charging stations 10 (charging station control devices 120). The charging station management server 20 can transmit the SBOMs of the EV charger 100, the power meter 110, and the charging station control device 120 included in each charging station 10 to the route determination device 30 in response to a request from the route determination device 30 described below. A specific method of using the SBOM by the route determination device 30 is described below.

Next, the route determination device 30 is described. When receiving the delivery request for requesting the delivery of the package, the route determination device 30 determines the route of the EV according to the received delivery request. The delivery request is an example of a "travel request" that requests the travel of the EV including one or more destinations and passing through the destination. The delivery request of the present embodiment includes one or more combinations of information indicating the package and information such as an address indicating a delivery destination (corresponding to a destination) of the package and is information requesting delivery of the package to the delivery destination. The delivery request can also be regarded as information for requesting a travel of the EV passing through the delivery destination included in the delivery request. Hereinafter, a specific configuration of the route determination device 30 is described.

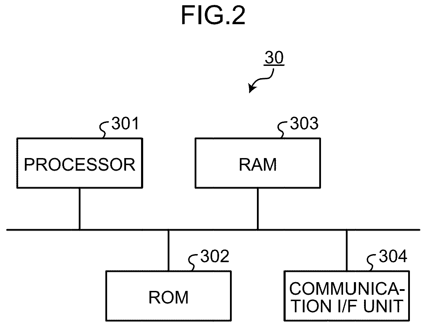

FIG. 2 is a diagram illustrating an example of a hardware configuration of the route determination device 30. In the present embodiment, the route determination device 30 is configured with a computer device. As illustrated in FIG. 2, the route determination device 30 includes a processor 301, a read only memory (ROM) 302, a random access memory (RAM) 303, and a communication I/F (interface) 304. Note that the hardware elements of the route determination device 30 are not limited to the configuration illustrated in FIG. 2, and may include other hardware elements (for example, a display device and an input device).

The processor 301 is, for example, a central processing unit (CPU). The processor 301 executes the program to integrally control the operation of the route determination device 30 and implement various functions of the route determination device 30. Various functions of the route determination device 30 are described below.

The ROM 302 is a non-volatile memory and stores various types of information including programs and the like executed by the processor 301. The RAM 303 is a volatile memory having a work area of the processor 301. The communication I/F unit 304 is an interface for connecting to the network 40.

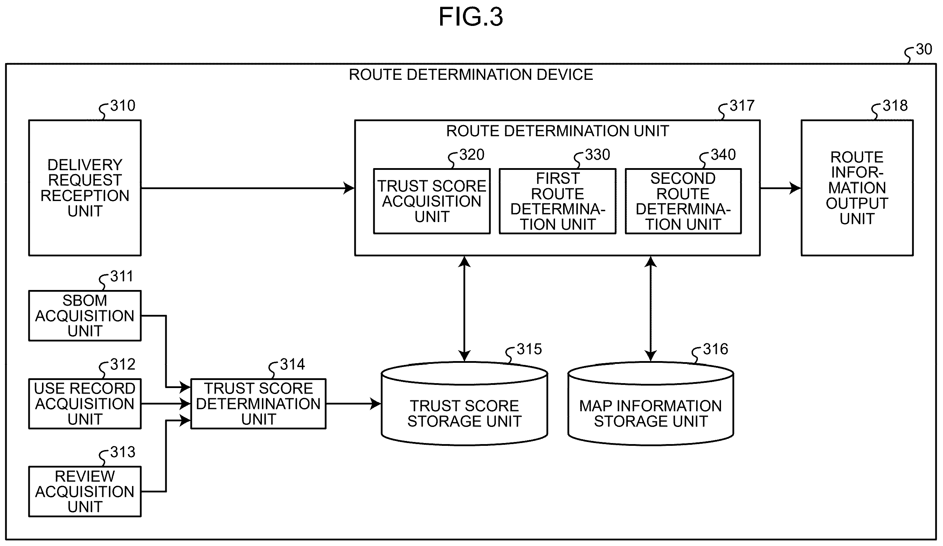

FIG. 3 is a diagram illustrating an example of functions of the route determination device 30. Note that, in the example of FIG. 3, only the functions necessary for describing the main part of the present embodiment are illustrated, but the functions of the route determination device 30 are not limited thereto.

As illustrated in FIG. 3, the route determination device 30 includes a delivery request reception unit 310, a SBOM acquisition unit 311, a use record acquisition unit 312, a review acquisition unit 313, a trust score determination unit 314, a trust score storage unit 315, a map information storage unit 316, a route determination unit 317, and a route information output unit 318. In the present embodiment, the processor 301 executes the program stored in the ROM 302, thereby implementing the functions of the delivery request reception unit 310, the SBOM acquisition unit 311, the use record acquisition unit 312, the review acquisition unit 313, the trust score determination unit 314, the route determination unit 317, and the route information output unit 318. However, the present invention is not limited thereto, and some or all of these functions may be implemented by a dedicated hardware circuit (semiconductor integrated circuit or the like). Furthermore, the trust score storage unit 315 and the map information storage unit 316 are implemented, for example, by the ROM 302 or the like, but are not limited thereto, and may be implemented, for example, by a storage device or the like externally attached to the route determination device 30.

The delivery request reception unit 310 is an example of a "travel request reception unit" and receives a delivery request for requesting delivery of a package. As described above, the delivery request includes one or more combinations of the information indicating the package and the information indicating the delivery destination (corresponding to the destination) of the package and is information requesting travel of the EV passing through the delivery destination of the package. In the present embodiment, the terminal 50 carried by the user transmits the delivery request input according to the operation of the user to the route determination device 30 via the network 40. Then, the delivery request reception unit 310 can receive the delivery request transmitted from the terminal 50 via the network 40.

The SBOM acquisition unit 311 is an example of a "trust score acquisition unit" and acquires the SBOMs of the EV charger 100, the power meter 110, and the charging station control device 120 included in each charging station 10 in the delivery system 1. In the present embodiment, the SBOM acquisition unit 311 accesses the charging station management server 20 to acquire the SBOM. The timing of acquiring the SBOM is arbitrary. For example, the SBOM acquisition unit 311 may periodically access the charging station management server 20 to acquire the SBOM or may acquire the SBOM when receiving notification of SBOM update from the charging station management server 20. In addition, for example, the charging station management server 20 may transmit the updated SBOM to the route determination device 30 (the SBOM acquisition unit 311) every time the SBOM managed by the charging station management server 20 is updated, or the charging station management server 20 may transmit the SBOMs of the devices to the route determination device 30 all at once every certain period. Further, for example, the SBOM acquisition unit 311 may directly acquire the SBOM of each device included in each charging station 10 from the charging station control device 120 of each charging station 10 without passing through the charging station management server 20.

The use record acquisition unit 312 acquires use records of the charging stations 10 in the delivery system 1. As an example of the use record, in the present embodiment, it is assumed that the time (charging time) required for charging the EV in the charging station 10 and the period of time (standby time) during which the EV waits until the start of charging in the charging station 10. In the present embodiment, the charging time and the standby time are counted by the EV, and information obtained by associating the counted result with the charging station 10 is transmitted to the EV management server 35. Then, the EV management server 35 manages the actual charging time and the standby time of each charging station 10. For example, the EV management server 35 may manage the average value of the actual charging time and the standby time for each charging station 10 and can periodically update and manage these pieces of information.

In the present embodiment, the use record acquisition unit 312 accesses the EV management server 35 to acquire the use record. The timing of acquiring the use record is arbitrary, and for example, the use record acquisition unit 312 may periodically access the EV management server 35 to acquire the use record or may acquire the use record when receiving the notification of the use record update from the EV management server 35. Note that, the present embodiment is not limited to this, and, for example, the EV management server 35 may update the use record every certain period and transmit the updated use record to the route determination device 30. Further, for example, the charging station management server 20 may manage the use record instead of the EV management server 35. In this case, the use record acquisition unit 312 can acquire the use record from the charging station management server 20.

The review acquisition unit 313 acquires a user's review (impression, remarks) for the charging station 10. In the present embodiment, the terminal 50 carried by the user transmits the review input according to the operation of the user to the route determination device 30 via the network 40. The review acquisition unit 313 can acquire the review transmitted from the terminal 50 via the network 40.

The SBOM acquired by the SBOM acquisition unit 311, the use record acquired by the use record acquisition unit 312, and the review acquired by the review acquisition unit 313 are input to the trust score determination unit 314 and used to determine the trust scores of the charging stations 10. A specific method of determining the trust score is described below.

The trust score determination unit 314 determines the trust scores of the charging stations 10 included in the delivery system 1. The trust score determination unit 314 determines the trust scores according to the evaluations of the charging stations 10. The evaluations includes evaluations based on SBOMs of a plurality of devices (the EV charger 100, the power meter 110, and the charging station control device 120) included in the charging station 10, evaluations regarding a use record, and evaluations based on a user's review. For each evaluation, the trust score determination unit 314 obtains the trust score (individual trust score) according to the evaluations and determines the trust score (overall trust score) of the charging station 10 based on the obtained trust score. Hereinafter, specific contents are described.

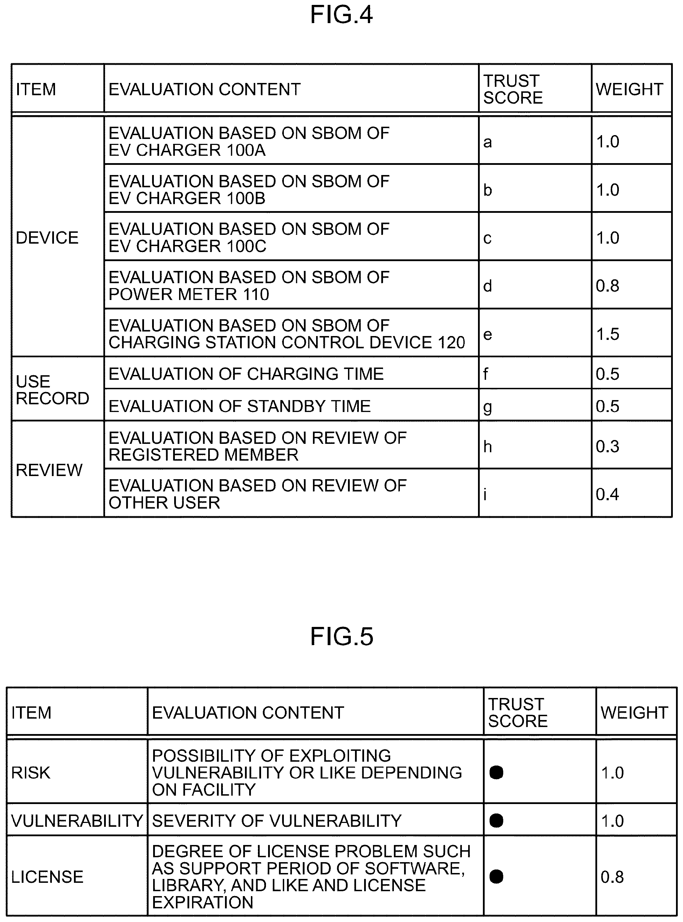

In the present embodiment, the trust score determination unit 314 determines the trust score of the charging station 10 using a trust score determination table for determining the trust score as illustrated in FIG. 4. The trust score determination table illustrated in FIG. 4 includes three items of "Device", "Use Record", and "Review" included in the charging station 10 as evaluation items, and the trust scores and the weights corresponding to the evaluations of the items are associated with each other for each item. Hereinafter, a method of determining the trust score according to the evaluations of each item is described.

First, a method of determining the trust score according to the evaluation of the "Device" is described. In the present embodiment, the evaluation of the "Device" is an evaluation based on the SBOMs of a plurality of devices (the EV charger 100, the power meter 110, and the charging station control device 120) included in the charging station 10. The trust score determination unit 314 determines the trust scores according to the evaluations based on the SBOM of the device, for each of the plurality of devices included in the charging station 10. In the present embodiment, the evaluation based on the SBOM is configured with three items of an evaluation regarding a risk, an evaluation regarding vulnerability, and an evaluation regarding a license, but is not limited thereto, and may be any one or a combination of two. In short, the evaluation based on the SBOM may include at least one of an evaluation regarding a risk, an evaluation regarding vulnerability, and an evaluation regarding a license, and the trust score determination unit 314 obtains at least one of the evaluation regarding a risk, the evaluation regarding vulnerability, and the evaluation regarding a license based on the SBOM and determines the trust score according to the obtained evaluation.

A method of determining the trust score according to the evaluation based on the SBOM is described. As described above, in the present embodiment, the evaluation based on the SBOM is configured with three items of an evaluation regarding a risk, an evaluation regarding vulnerability, and an evaluation regarding a license. In the present embodiment, for example, as illustrated in FIG. 5, a weight is set for each of the above items. The trust score determination unit 314 obtains the trust score corresponding to the evaluation of each item and performs weighted addition of the obtained trust score. The trust score determination unit 314 determines a result obtained by the weighted addition as the trust score according to the evaluation based on the SBOM. Hereinafter, a method of determining the trust score of each of the three items is described.

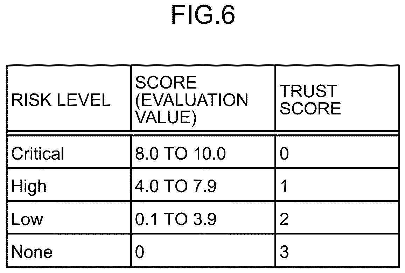

First, a method of determining the trust score according to the evaluation regarding a risk is described. FIG. 6 is a diagram illustrating an example of a correspondence relationship between a score (evaluation value) indicating the evaluation regarding a risk and the trust score. The risk refers to, for example, a possibility of exploiting vulnerability. In addition, the vulnerability refers to, for example, a possibility of impairing the safety of information. In the example of FIG. 6, the higher the score, the higher the possibility of exploiting the vulnerability, and the lower the trust score. In the example of FIG. 6, the trust score "3" is associated with the score "0", the trust score "2" is associated with the score in the range of "0.1 to 3.9", the trust score "1" is associated with the score in the range of "4.0 to 7.9", and the trust score "0" is associated with the score in the range of "8.0 to 10.0". Note that in the example of FIG. 6, the trust score is set to four stages, but the embodiment is not limited thereto, and the number of stages of the trust score can be arbitrarily changed according to design conditions and the like.

In addition, in the example of FIG. 6, the risk level is divided into four levels of "None", "Low", "High", and "Critical" according to the score, which means that the higher the score, the higher the risk level. In this example, the risk level "None" is a level indicating that there is no problem. "Low" is a level indicating that there is a possibility that the vulnerability is exploited only at the time of physical access, but there is almost no influence on the system or the business. In addition, "High" is a level indicating that it is difficult to exploit the vulnerability. Further, "Critical" is a level indicating that the vulnerability is easily exploited.

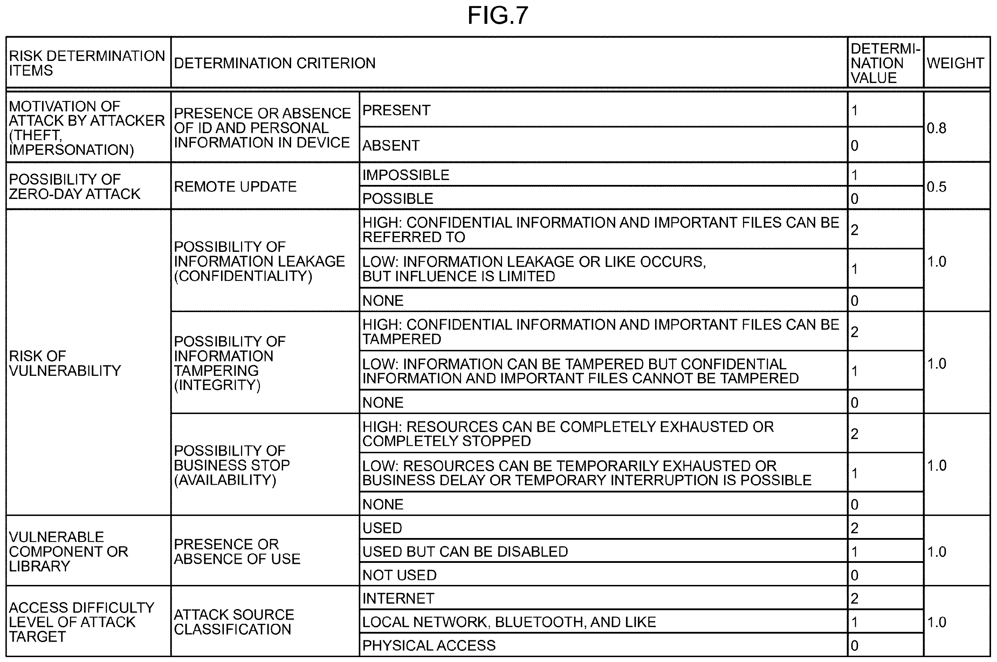

A method of obtaining the score of the risk is described. In the present embodiment, the trust score determination unit 314 obtains the score of the risk based on the determination table illustrated in FIG. 7, but the method of obtaining the score is not limited thereto. In the determination table of FIG. 7, there are five items of "Motivation of Attack by Attacker (Theft, Impersonation)", "Possibility of Zero-Day Attack", "Risk of Vulnerability", "Vulnerable Component or Library", and "Access Difficulty Level of Attack Target" as determination items, and a determination criterion and a determination value and a weight corresponding to a determination result are set for each item. The trust score determination unit 314 obtains a determination value of each item of the determination table illustrated in FIG. 7 using the SBOM of the device to be subjected to the trust score determination and performs weighted addition on the obtained determination value. The result of the weighted addition is the score of the risk. Hereinafter, a specific description is given.

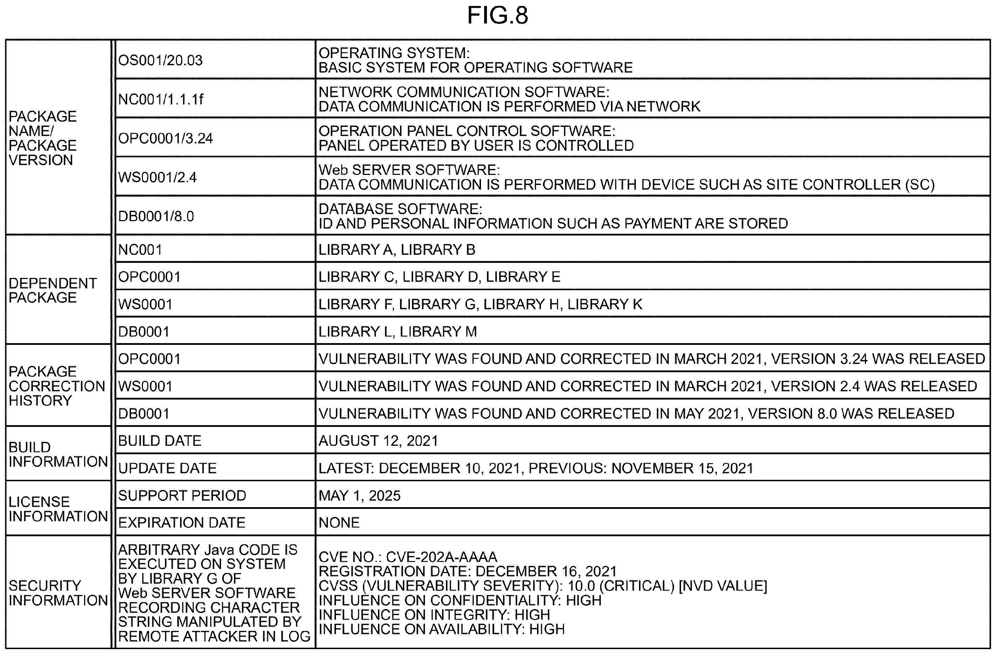

Prior to description of the determination method using the determination table illustrated in FIG. 7, specific contents of the SBOM are described with reference to FIG. 8. The SBOM is information (software bill of materials) indicating a configuration of software used in the device, and in the example of FIG. 8, a package name/package version, a dependent package, a package correction history, build information, license information, and security information are provided as items configuring the SBOM, but the invention is not limited thereto.

In the item of package name/package version, a specific package name/package version of software used in the device and a function description are described in association with each other. For example, with respect to the package name/package version "OS001/20.03", function description indicating that the software is an operating system which is a basic system for operating software is described in association. Similarly, with respect to "NC001/1.1.1f", function description indicating that the software is network communication software that performs data communication via a network is described in association. Similarly, with respect to "OPC0001/3.24", function description indicating that the software is operation panel control software for controlling a panel operated by a user is described in association. Similarly, with respect to "WS0001/2.4", function description indicating that the software is web server software that performs data communication with a device such as the charging station control device 120 is described in association. Similarly, with respect to "DB001/8.0", function description indicating that the software is database software for storing an ID, personal information used for payment, and the like is described in association.

In the item "dependent package", a package name and a library to be used are described in association with each other. For example, libraries A and B are associated with "NC001" indicating a package name of network communication software. This means that data communication is performed via the network using the libraries A and B. Similarly, libraries C, D, and E are associated with "OS001" indicating the package name of the operating system. Similarly, libraries F, G, H, and K are associated with "WS0001" indicating the package name of the web server software. Similarly, libraries L and M are associated with "DB0001" indicating a package name of the database software.

In the item of "Package Correction History", a correction history is described for each package. In the item of "Build Information", a build date and an update date are described. As the update date, the date of the latest update and the date of the previous update are described.

In the item of "License Information", a support period and an expiration date are described. In the item of "Security Information", information regarding vulnerability, a CVE number for identifying the information regarding vulnerability, a registration date of the CVE number, a CVSS value indicating the severity of the vulnerability, a degree of influence on confidentiality, a degree of influence on integrity, and a degree of influence on availability are described in association with each other. In the example of FIG. 8, it is described that an arbitrary Java code is executed on the system by the library G of a Web server software recording a character string manipulated by a remote attacker in a log as the information regarding the vulnerability.

The trust score determination unit 314 performs determination for each determination item in the determination table illustrated in FIG. 7 using the above-described SBOM and obtains a determination value according to the determination result. Then, the determination value obtained for each determination item is subjected to weighted addition, and a result of the weighted addition is determined as a score of the risk. Hereinafter, a determination method using the SBOM for each determination item in the determination table illustrated in FIG. 7 is described.

First, a method of determining "Motivation of Attack by Attacker" among five determination items included in the determination table illustrated in FIG. 7 is described. The determination criterion of the determination item is the presence or absence of ID and personal information such as payment information in the device. The trust score determination unit 314 determines the presence or absence of an ID and payment information in the device with reference to the SBOM. In the SBOM illustrated in FIG. 8, whether the personal information is stored is also described in the function description corresponding to the package name ("DB0001" in the example of FIG. 8) of the database software, and thus, the trust score determination unit 314 can determine the presence or absence of the personal information by referring to this portion. Then, a determination value corresponding to the determination result is obtained according to the determination table illustrated in FIG. 7. In the example of FIG. 7, when there is personal information, the determination value is "1", and when there is no personal information, the determination value is "0".

Next, a method of determining "Possibility of Zero-Day Attack" is described. The determination criterion of the determination item is whether remote update (update by remote control) can be performed. The trust score determination unit 314 determines whether remote update can be performed with reference to the SBOM. In this example, the condition that remote update can be performed is that network communication can be performed and that the device supports remote update. The trust score determination unit 314 can determine whether network communication can be performed by determining whether network communication software is used with reference to the SBOM. Furthermore, in the SBOM illustrated in FIG. 8, whether the device supports remote update is also described in the function description corresponding to the package name indicating the operating system. Therefore, the trust score determination unit 314 can determine whether the device supports remote update by referring to this part. Then, a determination value corresponding to the determination result is obtained according to the determination table illustrated in FIG. 7. In the example of FIG. 7, the determination value is "1" when remote update cannot be performed, and the determination value is "0" when remote update can be performed. When the remote update cannot be performed, there is higher possibility that time is required for the update than in a case where the remote update can be performed, and thus the risk increases accordingly.

Next, a method of determining the "Risk of Vulnerability" is described. There are three determination criteria of the determination item of "Possibility of Information Leakage", "Possibility of Information Tampering", and "Possibility of Business Stop", and a determination value and a weight corresponding to each determination result are set.

The trust score determination unit 314 determines the "Possibility of Information Leakage" with reference to the SBOM. As described with reference to FIG. 8, the degree of influence on confidentiality is also described in the item of the security information of the SBOM, and thus the trust score determination unit 314 can determine the possibility of information leakage by referring to this part. For example, when the influence on confidentiality is large, it can be determined that the possibility of information leakage is also high. Then, the trust score determination unit 314 obtains the determination value corresponding to the determination result according to the determination table illustrated in FIG. 7. In the example of FIG. 7, the determination value is "2" when the possibility of information leakage is high, the determination value is "1" when the possibility of information leakage is low, and the determination value is "0" when there is no possibility of information leakage. For example, the case where the possibility of information leakage is high is assumed to be a case where confidential information or an important file can be referred to. Furthermore, for example, a case where the possibility of information leakage is low is assumed to be a case where the influence is limited even if information leakage occurs.

Also, the trust score determination unit 314 determines the "Possibility of Information Tampering" with reference to the SBOM. As described with reference to FIG. 8, the degree of influence on integrity is also described in the item of the security information of the SBOM, and thus the trust score determination unit 314 can determine the possibility of information tampering by referring to this part. For example, when the influence on integrity is large, it can be determined that the possibility of information tampering is also high. Then, the trust score determination unit 314 obtains the determination value corresponding to the determination result according to the determination table illustrated in FIG. 7. In the example of FIG. 7, the determination value is "2" when the possibility of information tampering is high, the determination value is "1" when the possibility of information tampering is low, and the determination value is "0" when there is no possibility of information tampering. For example, the case where the possibility of information tampering is high is assumed to be a case where confidential information or an important file can be tampered. Furthermore, for example, the case where the possibility of information tampering is low is assumed to be a case where information can be tampered, but confidential information or an important file cannot be tampered.

Also, the trust score determination unit 314 determines the "Possibility of Business Stop" with reference to the SBOM. As described with reference to FIG. 8, the degree of influence on availability is also described in the item of the security information of the SBOM, and thus the trust score determination unit 314 can determine the possibility of business stop by referring to this part. For example, when the influence on availability is large, it can be determined that the possibility of business stop is also high. Then, the trust score determination unit 314 obtains the determination value corresponding to the determination result according to the determination table illustrated in FIG. 7. In the example of FIG. 7, the determination value is "2" when the possibility of business stop is high, the determination value is "1" when the possibility of business stop is low, and the determination value is "0" when there is no possibility of business stop. For example, the case where the possibility of business stop is high is assumed to be a case where resources can be completely exhausted or completely stopped. Furthermore, for example, the case where the possibility of business stop is low is assumed to be a case where resources are temporarily exhausted, or a case where business delay or temporary interruption is possible.

Next, a method of determining a "Vulnerable Component or Library" among the five determination items included in the determination table illustrated in FIG. 7 is described. The determination criterion of the determination item is whether a vulnerable component or library is used. The trust score determination unit 314 determines whether a vulnerable component or library is used with reference to the SBOM. As described with reference to FIG. 8, the security information of the SBOM also includes information regarding vulnerability, and in the example of FIG. 8, the library G is specified as the vulnerable library. Then, referring to the item of the dependent package of the SBOM illustrated in FIG. 8, the library G is described in association with "WS0001" indicating the package name of the Web server software. That is, since it is known that the Web server software uses the library G to perform data communication with a device such as the charging station control device 120, in this case, the trust score determination unit 314 can determine that the vulnerable library G is used. Then, the trust score determination unit 314 obtains the determination value corresponding to the determination result according to the determination table illustrated in FIG. 7. In the example of FIG. 7, the determination value is "2" when a vulnerable component or library is used, the determination value is "1" when the component or library is used but can be disabled, and the determination value is "0" when the component or library is not used.

Next, a method of determining "Access Difficulty Level of Attack Target" is described. The determination criterion of this determination item is whether the attack source classification is the Internet, the local network or Bluetooth (registered trademark), or physical access, and the access difficulty level becomes lower (the determination value becomes higher) in the order of the Internet, the local network or Bluetooth, and physical access. The trust score determination unit 314 determines any one of the Internet, the local network or Bluetooth, and physical access by a method of data communication with reference to the SBOM. In the SBOM illustrated in FIG. 8, a package name (NC001) indicating network communication software that performs data communication via a network is described, and in the corresponding function description, whether data communication is performed via the Internet, or whether data communication is performed via a local network or Bluetooth is also described. The trust score determination unit 314 can determine the method of data communication by referring to this part. Then, the trust score determination unit 314 obtains the determination value corresponding to the determination result according to the determination table illustrated in FIG. 7. In the example of FIG. 7, the determination value is "2" when the data communication method is the Internet, the determination value is "1" when the data communication method is the local network or Bluetooth, and the determination value is "0" when the data communication method is the physical access.

The trust score determination unit 314 performs weighted addition on the determination values obtained from the determination results described above by using the weights set in the determination table of FIG. 7 and determines the result of the weighted addition as the score of the risk. Then, the trust score determination unit 314 determines the trust score corresponding to the score of the risk with reference to the correspondence relationship illustrated in FIG. 6.

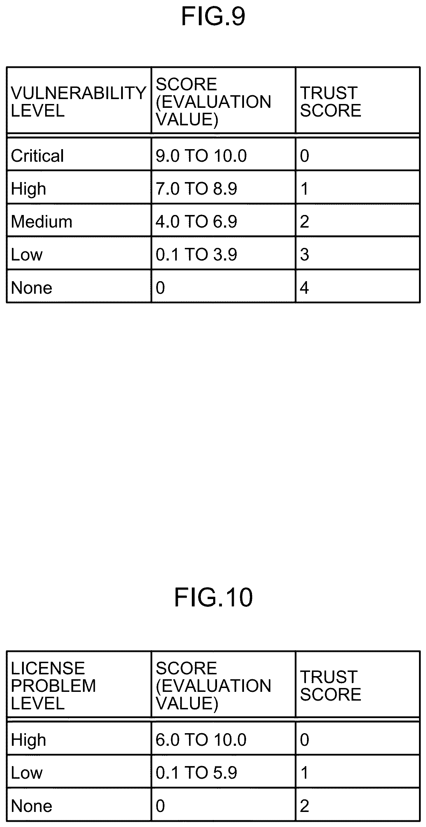

Next, a method of determining the trust score according to the evaluation regarding vulnerability among the three items illustrated in FIG. 5 is described. FIG. 9 is a diagram illustrating an example of a correspondence relationship between a score (evaluation value) indicating the evaluation regarding vulnerability and the trust score. As described above, the vulnerability refers to, for example, a possibility of impairing the safety of information. In the example of FIG. 9, the higher the score, the higher the vulnerability, and the lower the trust score. In the example of FIG. 9, the trust score "4" is associated with the score "0", the trust score "3" is associated with the score in the range of "0.1 to 3.9", the trust score "2" is associated with the score in the range of "4.0 to 6.9", the trust score "1" is associated with the score in the range of "7.0 to 8.9", and the trust score "0" is associated with the score in the range of "9.0 to 10.0". Note that in the example of FIG. 9, the trust score is set to five stages, but the embodiment is not limited thereto, and the number of stages of the trust score can be arbitrarily changed according to design conditions and the like.

In addition, in the example of FIG. 9, the risk level is divided into five levels of "None", "Low", "Medium", "High", and "Critical" according to the score, which means that the higher the score, the higher the vulnerability level. Note that the number of levels according to the score is not limited to this and can be arbitrarily set.

A method of obtaining the score of the vulnerability is described. In the present embodiment, the trust score determination unit 314 obtains the score of the vulnerability with reference to the SBOM illustrated in FIG. 8. More specifically, in the item of the security information of the SBOM illustrated in FIG. 8, the CVSS value indicating the severity of the vulnerability is described in association with the information regarding vulnerability. The trust score determination unit 314 determines this CVSS value as a score of vulnerability. Then, the trust score determination unit 314 determines the trust score corresponding to the score of the vulnerability with reference to the correspondence relationship illustrated in FIG. 9.

Next, a method of determining the trust score according to the evaluation regarding a license among the three items illustrated in FIG. 5 is described. FIG. 10 is a diagram illustrating an example of a correspondence relationship between a score (evaluation value) indicating the evaluation regarding a license and the trust score. The evaluation regarding a license can also be considered to represent the degree of a problem regarding the license (license problem). In the example of FIG. 10, the higher the score, the higher the degree of the license problem, and the lower the trust score. In the example of FIG. 10, the trust score "2" is associated with the score "0", the trust score "1" is associated with the score in the range of "0.1 to 5.9", and the trust score "2" is associated with the score in the range of "6.0 to 10.0". Note that in the example of FIG. 10, the trust score is set to three stages, but the embodiment is not limited thereto, and the number of stages of the trust score can be arbitrarily changed according to design conditions and the like.

In addition, in the example of FIG. 10, the level of license problem is divided into three levels of "None", "Low", and "High", according to the score, which means that the higher the score, the higher the level of license problem. In this example, the level of license problem "None" is a level indicating that there is no problem. "Low" is a level indicating that the service can be continued but a response such as license update is necessary. "High" is a level indicating that there is a possibility that the service is stopped, which corresponds to a decrease in quality of the service due to malfunction or the like, or a violation of a license. Note that the number of levels according to the score is not limited to this and can be arbitrarily changed according to design conditions or the like.

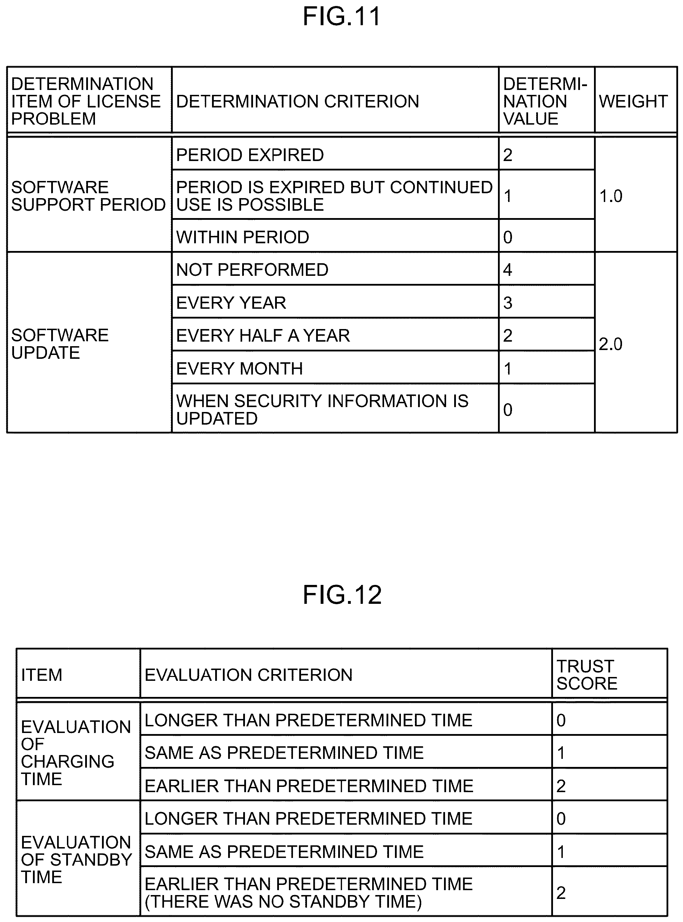

A method of obtaining the score of the license (score of the license task) is described. In the present embodiment, the trust score determination unit 314 obtains the score of the license based on the determination table illustrated in FIG. 11, but the method of obtaining the score is not limited thereto. In the determination table of FIG. 11, there are two items of "Software Support Period" and "Software Update" as determination items, and a determination criterion, a determination value and a weight according to a determination result are set for each item. The trust score determination unit 314 performs determination for each determination item in the determination table illustrated in FIG. 11 using the SBOM described with reference to FIG. 8 and obtains a determination value according to the determination result. Then, the determination value obtained for each determination item is subjected to weighted addition, and a result of the weighted addition is determined as a score of the license. Hereinafter, a determination method using the SBOM for each determination item in the determination table illustrated in FIG. 11 is described.

First, a method of determining the "Software Support Period" among the two determination items included in the determination table illustrated in FIG. 11 is described. The determination criterion of the determination item is whether the software is within the software support period. As described above, the support period is described in the item of the license information of the SBOM illustrated in FIG. 8. The trust score determination unit 314 can determine whether the software is within a software support period by referring to this part. Then, the trust score determination unit 314 obtains the determination value corresponding to the determination result according to the determination table illustrated in FIG. 11. In the example of FIG. 11, the determination value is "2" when the support period of the software is expired, the determination value is "1" when the support period is expired but continued use is possible, and the determination value is "0" when the software is within the period.

Next, a method of determining "Software Update" is described. The determination criterion of the determination item is whether the software is properly updated. In the example of FIG. 11, five determination criteria of being not updated, being updated every year, being updated every half year, being updated every month, and being updated at the time of updating the security information are provided as the determination criteria. As described above, in the item of the build information of the SBOM illustrated in FIG. 8, the date of the latest update and the date of the previous update are described as the update date. The trust score determination unit 314 can determine update frequency of the software by referring to this part. Then, the trust score determination unit 314 obtains the determination value corresponding to the determination result according to the determination table illustrated in FIG. 11. In the example of FIG. 11, the determination value is "4" when the update is not performed, the determination value is "3" when the update is performed every year, the determination value is "2" when the update is performed every half a year, the determination value is "1" when the update is performed every month, and the determination value is "0" when the update is performed at the time of updating the security information.

The trust score determination unit 314 performs weighted addition on the determination values obtained from the determination results described above by using the weights set in the determination table of FIG. 11 and determines the result of the weighted addition as the score of the license. Then, the trust score determination unit 314 determines the trust score corresponding to the score of the license with reference to the correspondence relationship illustrated in FIG. 10.

As described above, the trust score determination unit 314 determines the trust scores of the three items (the evaluation regarding a risk, the evaluation regarding vulnerability, and the evaluation regarding a license) illustrated in FIG. 5, and performs weighted addition using the weight set for each item. The trust score determination unit 314 determines a result obtained by the weighted addition as the trust score according to the evaluation based on the SBOM. By the above method, for each device included in the charging station 10, the trust score determination unit 314 determines the trust score according to the evaluation based on the SBOM of the device.

Next, a method of determining the trust score according to the evaluation based on the "use record" among the three items illustrated in FIG. 4 is described. As the evaluation of the "use record", there are an evaluation regarding charging time and an evaluation regarding standby time. The trust score determination unit 314 determines trust score according to the evaluation regarding charging time and trust score according to the evaluation regarding standby time. In the present embodiment, the trust score determination unit 314 determines the trust score such that the smaller the difference between the actual charging time in the charging station 10 and the predetermined charging time, the higher the evaluation regarding the charging time of the charging station 10 and the higher the trust score, and the smaller the difference between the actual standby time in the charging station 10 and the predetermined standby time, the higher the evaluation regarding the standby time of the charging station 10 and the higher the trust score.

FIG. 12 is a diagram illustrating an example of correspondence information indicating correspondence relationships between evaluation criteria of the evaluation regarding the charging time and the evaluation regarding the standby time, and the trust score. In the correspondence information illustrated in FIG. 12, the smaller the difference between the actual charging time and the previously-assumed charging time (set value), the higher the evaluation regarding the charging time and the higher the trust score, and the smaller the difference between the actual standby time and the previously-assumed standby time (set value), the higher the evaluation regarding the standby time and the higher the trust score.

More specifically, it is as follows. First, the correspondence relationships between the evaluation criteria of the evaluation regarding the charging time and the trust score are described. In the example of the correspondence information illustrated in FIG. 12, in a case where the difference (a value obtained by subtracting the predetermined charging time from the actual charging time) between the actual charging time and the predetermined charging time is a positive value and exceeds a first predetermined value, the case corresponds to the evaluation criterion of "has been longer than the predetermined time" and is evaluated as low. The trust score associated with the low evaluation is set to "0". In addition, in a case where the difference between the actual charging time and the predetermined charging time is equal to or less than the first predetermined value in terms of absolute value, the case corresponds to the evaluation criteria of "was as the predetermined time" and is evaluated as ordinary. The trust score associated with the evaluation as ordinary is set to "1". Furthermore, in a case where the difference between the actual charging time and the predetermined charging time is a negative value and exceeds the first predetermined value, the case corresponds to the evaluation criterion of "earlier than the predetermined time" and is evaluated as high. The trust score associated with the high evaluation is set to "2".

Next, the correspondence relationships between the evaluation criteria of the evaluation regarding the standby time and the trust score are described. In the example of the correspondence information illustrated in FIG. 12, in a case where the difference (a value obtained by subtracting the predetermined standby time from the actual standby time) between the actual standby time and the predetermined standby time is a positive value and exceeds a second predetermined value, the case corresponds to the evaluation criterion of "has been longer than the predetermined time" and is evaluated as low. The trust score associated with the low evaluation is set to "0". In addition, in a case where the difference between the actual standby time and the predetermined standby time is equal to or less than the second predetermined value in terms of absolute value, the case corresponds to the evaluation criteria of "was as the predetermined time" and is evaluated as ordinary. The trust score associated with the evaluation as ordinary is set to "1". Furthermore, in a case where the difference between the actual charging time and the predetermined charging time is a negative value and exceeds the second predetermined value, the case corresponds to the evaluation criterion of "earlier than the predetermined time" and is evaluated as high. The trust score associated with the high evaluation is set to "2".

As described above, the trust score determination unit 314 obtains an evaluation according to a difference between the charging time (actual charging time) included in the use record acquired by the use record acquisition unit 312 and the previously-assumed charging time (set value) using the correspondence information illustrated in FIG. 12 and determines the trust score according to the obtained evaluation. Similarly, the trust score determination unit 314 obtains an evaluation according to a difference between the standby time (actual standby time) included in the use record acquired by the use record acquisition unit 312 and the previously-assumed standby time (set value) using the correspondence information illustrated in FIG. 12 and determines the trust score according to the obtained evaluation.

Next, a method of determining the trust score according to the evaluation based on "review" among the three items illustrated in FIG. 4 is described. The evaluation based on the review includes an evaluation based on the review of the registered member and an evaluation based on the review of the unregistered member. The trust score determination unit 314 determines the trust score according to the evaluation based on the review of the registered member and the trust score according to the evaluation based on the review of the unregistered member. In the present embodiment, the trust score determination unit 314 determines the trust score such that the higher the evaluation based on the review, the higher the trust score.

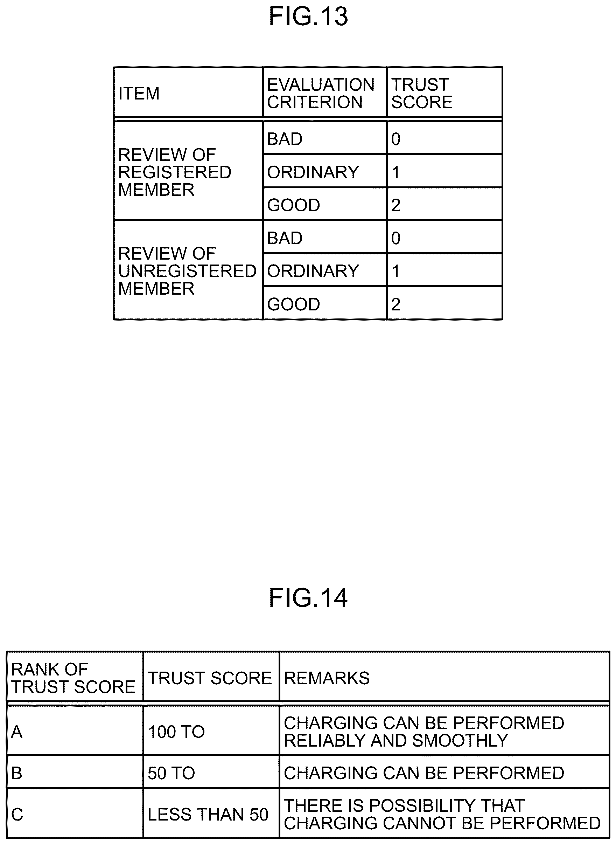

FIG. 13 is a diagram illustrating an example of correspondence information indicating correspondence relationships between evaluation criteria of the evaluation based on the review of the registered member and the evaluation based on the review of the unregistered member and the trust score. In the correspondence information illustrated in FIG. 13, the better the content of the review, the higher the evaluation and the higher the trust score. The evaluation criteria of the evaluation based on the review include three levels of "bad", "ordinary", and "good". For example, in a case where a negative expression included in the review is equal to or higher than a first threshold value, the case corresponds to "bad" and is evaluated as low. The trust score associated with the low evaluation is set to "0". Furthermore, for example, in a case where a negative expression included in the review is equal to or more than a second threshold value (< first threshold value) and less than the first threshold value, the case corresponds to the evaluation criterion of "ordinary" and is evaluated as ordinary. The trust score associated with the evaluation as ordinary is set to "1". Furthermore, for example, in a case where a negative expression included in the review is less than the second threshold value, the case corresponds to the evaluation criterion of "good" and is evaluated as high. The trust score associated with the high evaluation is set to "2".

As described above, the trust score determination unit 314 obtains an evaluation based on the review acquired by the review acquisition unit 313 using the correspondence information illustrated in FIG. 13 and determines the trust score according to the obtained evaluation.

As described above, the trust score determination unit 314 obtains the trust scores (individual trust scores) of the plurality of devices, the use records, and the reviews included in the charging station 10, performs weighted addition using the weight determined for each item in the trust score determination table illustrated in FIG. 4, and determines the result of the weighted addition as the overall trust score. Note that the weight determined for each item in the trust score determination table illustrated in FIG. 4 is an example and can be arbitrarily changed according to design conditions and the like.

Hereinafter, a calculation example of the overall trust score is described. For example, in the trust score determination table illustrated in FIG. 4, the maximum value of the trust score according to the evaluation based on the SBOM of "Device" is set to 9.6, the maximum value of the trust score according to the evaluation regarding the charging time included in the evaluation of "Use Record" is set to 2.0, the maximum value of the trust score according to the evaluation regarding the standby time is set to 2.0, the maximum value of the trust score according to the evaluation based on the review of the registered member included in the evaluation of "Review" is set to 2.0, and the maximum value of the trust score according to the evaluation based on the review of the unregistered member is set to 2.0. Considering the case where the weighted addition is performed using the trust score of each item of the trust score determination table illustrated in FIG. 4 as the maximum value, the result of the weighted addition is (EV Charger 100A:9.6×1.0+EV Charger 100B:9.6×1.0+EV Charger 100C:9.6×1.0+Power Meter 110:9.6×0.8+Charging Station Control Device 120:9.6×1.5)+(Charging Time:2×0.5+Standby Time:2×0.5)+(Review of Registered Member:2×0.3+Review of Unregistered Member:2×0.4)=63.52.

It is assumed that the overall trust score in the above case is "100", and for example, in the trust score determination table illustrated in FIG. 4, a trust score a of the EV charger 100A=7.6, a trust score b of the EV charger 100B=7.6, a trust score c of the EV charger 100C=9.6, a trust score d of the power meter 110=8.8, a trust score e of the charging station control device 120=6.8, a trust score f according to the evaluation regarding the charging time=1.0, a trust score g according to the evaluation regarding the standby time=1.0, a trust score h based on the review of the registered member=1.0, and a trust score i based on the review of the unregistered member=2.0. The overall trust score in this case can be calculated as (100/63.52)×(EV Charger 100A:7.6×1.0+EV Charger 100B:7.6×1.0+EV Charger 100C:9.6×1.0+Power Meter 110:8.8×0.8+Charging Station Control Device 120:6.8×1.5)+(Charging Time:1×0.5+Standby Time:1×0.5)+(Review of Registered Member:1×0.3+Review of Unregistered Member:2×0.4)=82.084.

The trust score determination unit 314 can also determine the rank corresponding to the trust score of the charging station 10 obtained as described above, for example, using the correspondence information indicating the correspondence relationship between the rank and the trust score as illustrated in FIG. 14. In the example of FIG. 14, the ranks are divided into three stages of "A", "B", and "C", and are classified into the "A" rank when the trust score is 100 or more, the "B" rank when the trust score is 50 or more and less than 100, and the "C" rank when the trust score is less than 50. As described above, the case of the trust score=82.084 corresponds to the "B" rank.

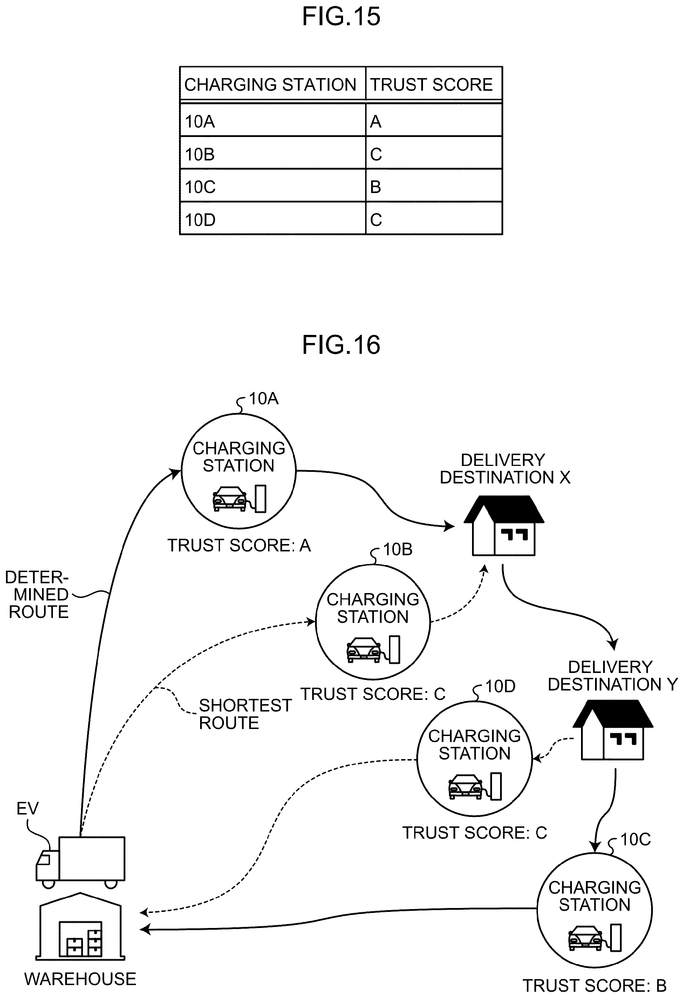

As described above, the trust score determination unit 314 determines the trust score and the rank of the charging station 10 for each of the charging stations 10 included in the delivery system 1. Then, the trust score determination unit 314 creates, for example, information indicating the rank of each charging station 10 (referred to as "charging station trust score information" in the following description) as illustrated in FIG. 15. Then, the trust score determination unit 314 stores the created charging station trust score information in the trust score storage unit 315. Furthermore, for example, the trust score determination unit 314 can update the charging station trust score information each time the trust scores of the devices, the use records, and the reviews included in the charging station 10 are updated, and store the updated charging station trust score information in the trust score storage unit 315.

Referring back to FIG. 3, the description is continued. The map information storage unit 316 stores map information. A method of using the map information is described below.

When the delivery request is received by the delivery request reception unit 310, the route determination unit 317 determines the route of the EV passing through the delivery destination included in the received delivery request and one or more charging stations 10 based on the trust score acquired from the trust score storage unit 315. Here, the route is a travel route of the EV from departure from the warehouse to return to the warehouse passing through the delivery destination and one or more charging stations 10. Hereinafter, specific contents of the route determination unit 317 are described.

As illustrated in FIG. 3, the route determination unit 317 includes a trust score acquisition unit 320, a first route determination unit 330, and a second route determination unit 340.

The trust score acquisition unit 320 acquires the trust scores of the charging stations 10 from the trust score storage unit 315. In the present embodiment, the trust score acquisition unit 320 acquires the charging station trust score information from the trust score storage unit 315 when the delivery request is received by the delivery request reception unit 310. Note that the acquisition timing of the charging station trust score information is arbitrary, and for example, the trust score acquisition unit 320 may acquire the charging station trust score information when the charging station trust score information stored in the trust score storage unit 315 is updated.

When the delivery request is received by the delivery request reception unit 310, the first route determination unit 330 determines the route of the EV passing through the delivery destination included in the delivery request and one or more charging stations 10 based on the trust score acquired by the trust score acquisition unit 320. In the present embodiment, the first route determination unit 330 preferentially selects the charging station 10 with high trust score from among the plurality of candidates of the charging station 10 and determines the route of the EV. Furthermore, the first route determination unit 330 determines the route of the EV with reference to the shortest route among one or more routes passing through the delivery destination included in the delivery request and one or more charging stations 10 and based on the trust score acquired by the trust score acquisition unit 320. Specific contents thereof are described below.

The second route determination unit 340 determines the shortest route of the EV passing through the delivery destination included in the delivery request received by the delivery request reception unit 310 and one or more charging stations 10. In the present embodiment, the second route determination unit 340 specifies one or more routes of the EV from the departure from the warehouse to the return to the warehouse passing through the delivery destination included in the delivery request received by the delivery request reception unit 310 and the one or more charging stations 10 using the map information stored in the map information storage unit 316. Then, the second route determination unit 340 determines the route having the shortest travel distance from among the one or more specified routes. In this example, the second route determination unit 340 determines the shortest route by selecting the charging station 10 that can arrive at the delivery destination at the shortest time from the distance range in which the vehicle can travel with full charging on the assumption that the charging amount of the EV at the time of starting the delivery is full charging and the EV is fully charged in the charging station 10 through which the vehicle passes on the way.

Hereinafter, a route determination method by the first route determination unit 330 using the trust score acquired by the trust score acquisition unit 320 and the shortest route determined by the second route determination unit 340 is described. When the charging station 10 (hereinafter, may be referred to as the "first charging station 10") having the trust score less than the threshold value exists on the shortest route determined by the second route determination unit 340, and the charging station 10 (hereinafter, may be referred to as the "second charging station 10") having the trust score equal to or higher than the threshold value exists within a predetermined distance of the charging station 10, the first route determination unit 330 determines the route of the EV to pass through the second charging station 10 instead of the first charging station 10. Furthermore, for example, when the second charging station 10 does not exist within the predetermined distance of the first charging station 10, the first route determination unit 330 can directly select the first charging station 10 on the shortest route.

In the present embodiment, as an example, the charging station 10 having the rank of the trust score less than "B", that is, the charging station 10 having the rank of the trust score of "C" is the "first charging station 10". For example, it is assumed that the delivery request received by the delivery request reception unit 310 includes a delivery destination X and a delivery destination Y illustrated in FIG. 16, and the shortest route determined by the second route determination unit 340 is from the warehouse to the charging station 10B, to the delivery destination X, to the delivery destination Y, to the charging station 10D, and to the warehouse. At this time, when the charging station trust score information acquired by the trust score acquisition unit 320 has the content illustrated in FIG. 15, the rank of the trust score of each of the charging station 10B and the charging station 10D is "C", and thus the charging station 10B and the charging station 10D correspond to the first charging stations 10 described above. For each of the charging station 10B and the charging station 10D, the first route determination unit 330 confirms whether the charging station 10 (the second charging station 10) having the rank of the trust score of "B" or higher within the predetermined distance of the charging stations exists.

In the example of FIG. 16, since the charging station 10A having the rank of the trust score of "A" exists within the predetermined distance of the charging station 10B, the first route determination unit 330 selects the charging station 10A instead of the charging station 10B. In this manner, the first route determination unit 330 preferentially selects the charging station 10 with high trust score from among the plurality of candidates of the charging station 10. Note that, in this example, the second charging station 10 existing within the predetermined distance of the charging station 10B is only the charging station 10A. However, for example, when the plurality of second charging stations 10 exist within the predetermined distance of the charging station 10B, the second charging station 10 close to the shortest route is selected from among the second charging stations.

Similarly, in the example of FIG. 16, since the charging station 10C having the rank of the trust score of "B" exists within the predetermined distance of the charging station 10D, the first route determination unit 330 selects the charging station 10C instead of the charging station 10D. As described above, the first route determination unit 330 determines the route of the EV according to the delivery request received by the delivery request reception unit 310 as from the warehouse, to the charging station 10A, to the delivery destination X, to the delivery destination Y, to the charging station 10C, and to the warehouse.

Referring back to FIG. 3, the description is continued. The route information output unit 318 outputs route information indicating the route of the EV determined by the route determination unit 317 (the first route determination unit 330). In the present embodiment, the route information output unit 318 outputs the route information to the EV management server 35.

Next, the EV management server 35 illustrated in FIG. 2 is described. The EV management server 35 is a device that manages a plurality of EVs used for delivery. As described above, in the present embodiment, the charging time and the standby time are counted by the EV, the information in which the counted result is associated with the charging station 10 is transmitted to the EV management server 35, and the EV management server 35 manages the actual charging time and the actual standby time of each charging station 10 (manages the use records). Further, the EV management server 35 receives the route information output from the route determination device 30. In the present embodiment, a delivery company that delivers a package using the EV manages the EV management server 35, and the delivery company causes the EV to travel according to the route information received by the EV management server 35. The above is the specific content of each device included in the delivery system 1.

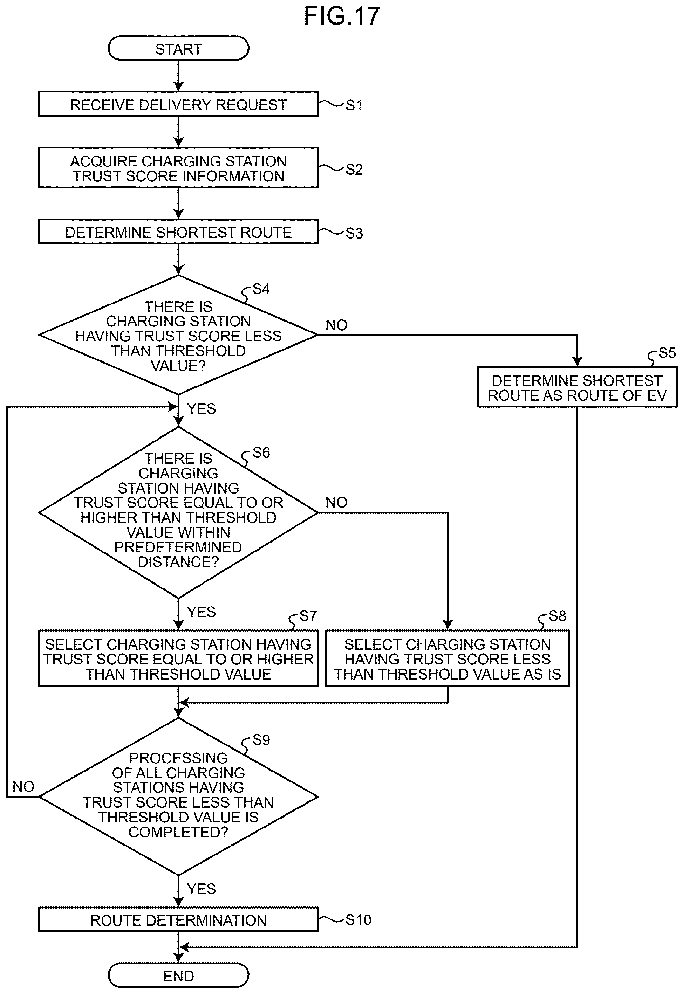

FIG. 17 is a flowchart illustrating an operation example of the route determination device 30 according to the present embodiment. In the following description of processing by each function of the route determination device 30, description of portions overlapping with the above description is appropriately omitted. Furthermore, the order of steps in the flowchart of FIG. 17 is not limited to the example of FIG. 17 and can be changed as appropriate.

As illustrated in FIG. 17, first, the delivery request reception unit 310 receives the delivery request (step S1). Next, the trust score acquisition unit 320 acquires the charging station trust score information from the trust score storage unit 315 (step S2). Next, the second route determination unit 340 uses the delivery request acquired in Step S1 and the map information stored in the map information storage unit 316 to determine the shortest route of the EV passing through the delivery destination included in the delivery request and one or more charging stations 10 (Step S3).

Next, the first route determination unit 330 uses the charging station trust score information acquired in step S2 and the shortest route determined in step S3 to determine whether the charging station 10 having the trust score less than the threshold value (the rank of the trust score is less than "B" in the present embodiment) exists on the shortest route (step S4). If the determination result in step S4 is negative (step S4: No), the first route determination unit 330 determines the shortest route determined in step S3 as the route of the EV (step S5).

When the determination result in step S4 is affirmative (step S4: Yes), the first route determination unit 330 executes the following processing in steps S6 to S8 for each of the charging stations 10 existing on the shortest route and having trust score lower than the threshold value.

In step S6, the first route determination unit 330 determines whether the charging station 10 having the trust score of equal to or higher than the threshold value (the rank of the trust score is equal to or higher than "B" in the present embodiment) exists within the predetermined distance of the charging station 10 having the trust score of less than the threshold value (step S6). If the result of step S6 is affirmative (step S6: Yes), the first route determination unit 330 selects the charging station 10 having trust score equal to or higher than the threshold value instead of the charging station 10 having trust score less than the threshold value (step S7). Note that, as described above, when the plurality of charging stations 10 having the trust score equal to or higher than the threshold value exist, the first route determination unit 330 can select the charging station 10 closer to the shortest route. If the result of step S6 is negative (step S6: No), the first route determination unit 330 selects the charging station 10 having the trust score of less than the threshold value on the shortest route as is (step S8).

When the processing of steps S6 to S8 described above is completed for all of the charging stations 10 having the trust score of less than the threshold value (step S9: Yes), the route of the EV is determined according to the selection result by the first route determination unit 330 (step S10), and the processing ends.

As described above, the route determination device 30 according to the present embodiment determines the route of the EV passing through the delivery destination included in the delivery request and one or more charging stations 10 based on the trust scores of the plurality of charging stations 10 included in the delivery system 1. By determining the route of the EV in consideration of the trust score of the charging station 10, the route that can safely charge the EV can be determined. More specifically, the route determination device 30 according to the present embodiment preferentially selects the charging station 10 having high trust score from the plurality of candidates of the charging station 10 and determines the route of the EV, so that the route that can safely charge the EV can be determined.

Furthermore, as described above, the route determination device 30 according to the present embodiment determines the route of the EV with reference to the shortest route of the EV passing through the delivery destination included in the delivery request and one or more charging stations 10 and based on the trust scores of the plurality of charging stations 10 included in the delivery system 1. More specifically, when the first charging station 10 indicating the charging station 10 having the trust score of less than the threshold value exists on the shortest route, and the second charging station 10 indicating the charging station 10 having the trust score of equal to or higher than the threshold value exists within the predetermined distance of the first charging station 10, the route determination device 30 according to the present embodiment determines the route of the EV passing through the second charging station 10 instead of the first charging station 10. As a result, a safe and shortest route can be determined as the route of the EV passing through the delivery destination included in the delivery request and one or more charging stations 10.

Further, as described above, the trust score of the charging station 10 is determined according to the evaluation based on the SBOMs of the plurality of devices included in the charging station 10, and the evaluation based on the SBOM includes at least one of the evaluation regarding a risk, the evaluation regarding vulnerability, and the evaluation regarding a license. A safe route that preferentially passes through the charging station 10 in which the risk, the vulnerability, and the safety of the license are ensured can be determined by preferentially selecting the charging station 10 having the high trust score according to the evaluation based on the SBOM and determining the route.

Furthermore, as described above, the trust score of the charging station 10 is determined according to the evaluation regarding the charging time and the evaluation regarding the standby time of the charging station 10. Further, the trust score of the charging station 10 is determined according to the evaluation based on the user's review. The route that can safely and comfortably charge the EV can be determined by preferentially selecting the charging station 10 having high trust score according to the evaluation based on the above-described SBOM, high trust score according to the evaluation regarding the use record (charging time, standby time), and high trust score according to the evaluation based on the review and determining the route.

In the above, the embodiment of the present disclosure is described, but the embodiment is presented as an example and is not intended to limit the scope of the invention. These new embodiments can be implemented in various other forms, and various omissions, substitutions, and changes can be made without departing from the gist of the invention. These novel embodiments and modifications thereof are included in the scope and gist of the invention and are included in the invention described in the claims and the equivalent scope thereof.

Furthermore, the effects of the embodiments described in the present specification are merely examples and are not limited, and other effects may be provided.

Hereinafter, modifications are described.

### (1) Modification 1

In the above-described embodiment, the second route determination unit 340 determines the shortest route on the assumption that the charging amount of the EV at the start of delivery is full charging, but the present invention is not limited thereto, and for example, the shortest route can be determined according to the actual charging amount (not limited to full charging) of the EV used for delivery. For example, in a mode in which the route determination device 30 designates the EV to be used for delivery, the second route determination unit 340 can select the charging station 10 closest to the delivery destination from among the charging stations 10 existing in the travelable range according to the charging amount of the EV to be used for delivery and determine the shortest route.

Note that a method of designating the EV to be used in the delivery is arbitrary, and for example, the route determination device 30 may designate the EVs in order such that the use frequencies are equal and may designate the EVs such that the travel distances are equal, or information designating the EVs to be used may be included in the delivery request received from the outside.

### (2) Modification 2

In the above-described embodiment, it is assumed that the EV is fully charged at the charging station 10 on the route determined by the first route determination unit 330, but for example, depending on the distance to the next charging station 10 or the warehouse, there may be a case where it is not necessary to fully charge the EV at the charging station 10 in front.

Therefore, the first route determination unit 330 can also determine the charging amount to the EV in the charging station 10 based on the determined position of the charging station 10 on the route of the EV. In this case, in addition to the above-described route information, the route determination device 30 can also output information indicating the charging amount of the EV in the charging station 10 on the route indicated by the route information to the EV management server 35.

In addition, for example, depending on the position of the charging station 10 having the high trust score (the second charging station 10) selected instead of the charging station 10 having the low trust score (the first charging station 10), the EV can reach the warehouse without passing through the charging station 10 after the selected charging station 10 having the high trust score in some cases. In such a case, the first route determination unit 330 may determine the route with skipping the next charging station 10. That is, the first route determination unit 330 can also determine the route based on the position of the preferentially selected charging station 10 having the high trust score.

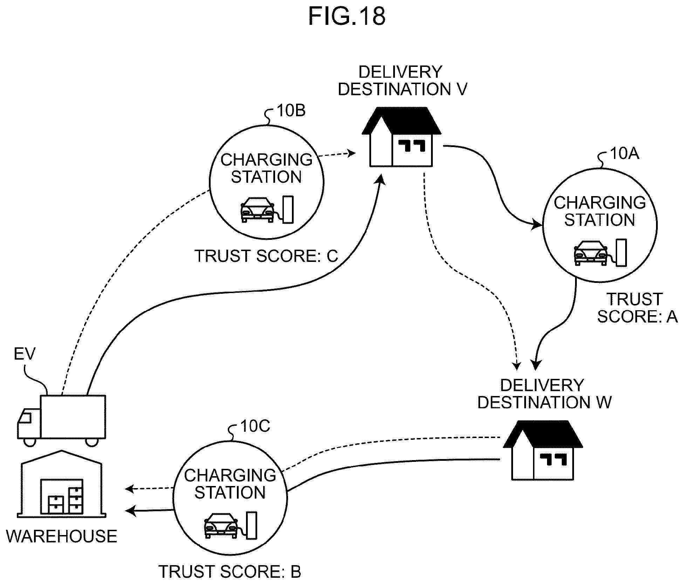

For example, as indicated by a dotted line in FIG. 18, it is assumed that the shortest route of the EV determined by the second route determination unit 340 is from the warehouse, to the charging station 10B (the rank of the trust score "C"), to the delivery destination V, to the delivery destination W, to the charging station 10C (the rank of the trust score "B"), and to the warehouse. In the example of FIG. 18, since the charging station 10A (the rank of the trust score "A") having the rank of the trust score equal to or higher than "B" exists within the predetermined distance of the charging station 10B having the rank of the trust score lower than "B", the first route determination unit 330 can select the charging station 10A instead of the charging station 10B and determine the route of the EV from the warehouse, to the delivery destination V, to the charging station 10A, to the delivery destination W, to the charging station 10C, and to the warehouse as illustrated by the solid line in FIG. 18.

In the example of FIG. 18, depending on the positions of the charging station 10A and the charging station 10C, a case where it is not necessary to fully charge the EV in each of the charging station 10A and the charging station 10C may be considered. The first route determination unit 330 can determine the charging amount of the EV in each of the charging station 10A and the charging station 10C such that the EV can travel via the warehouse, to the delivery destination V, to the charging station 10A, to the delivery destination W, to the charging station 10C, and to the warehouse. For example, the charging amount of the EV in each charging station 10 can be set to the amount with which the EV can travel to the next charging station 10 or the warehouse. Furthermore, for example, when the EV can reach the warehouse without passing through the charging station 10C if the EV is fully charged in the charging station 10A, the first route determination unit 330 can determine the route with skipping the charging station 10C. In this case, the route of the EV is from the warehouse, to the delivery destination V, to the charging station 10A, to the delivery destination W, and to the warehouse.

### (3) Modification 3

In the above-described embodiment, the trust score storage unit 315 and the map information storage unit 316 are provided in the route determination device 30, but the present invention is not limited thereto, and the storage destinations of the trust score storage unit 315 and the map information storage unit 316 are arbitrary and may be provided, for example, in a device (an external device such as a server and a storage device) outside the route determination device 30.

### (4) Modification 4

For example, the above-described trust score may be determined according to the evaluation regarding the degree of congestion of the charging station 10. In this case, "Degree of Congestion" is provided as an evaluation item in the trust score determination table described above, and a predetermined weight is associated.

For example, the charging station management server 20 may monitor the degrees of crowding of the plurality of charging stations 10 included in the delivery system 1 and record and manage the average degree of crowding for each of the charging stations 10 in each of the plurality of time zones. Further, for example, the charging station management server 20 can periodically update the degrees of crowding of the charging stations 10.

For example, the delivery request may include time information specifying delivery time, and the trust score determination unit 314 can acquire the degrees of crowding of the charging stations 10 corresponding to the time information included in the delivery request from the charging station management server 20. The trust score determination unit 314 determines the trust score such that the higher the degree of crowding of the charging station 10, the lower the evaluation regarding the degree of crowding of the charging station 10 and the lower the trust score. Then, similarly to the above-described embodiment, the trust score determination unit 314 can perform weighted addition on the trust score (individual trust score) of each of the plurality of devices, the use record, the review, and the degree of crowding included in the charging station 10 and determine results of the weighted addition as the overall trust scores. The route that can safely and comfortably charge the EV can be determined by preferentially selecting the charging station 10 having high trust score according to the evaluation based on the above-described SBOM and high trust score according to the evaluation regarding the degree of crowding and determining the route.

### (5) Modification 5

The charging station trust score information described in the above embodiment is information indicating the rank of the trust score of each of the plurality of charging stations 10 included in the delivery system 1, but the present invention is not limited thereto. For example, the charging station trust score information may be information indicating the value of the trust score of each charging station without performing ranking.

### (6) Modification 6

The above-described route determination device 30 is applied to the delivery system 1 that delivers a package using an EV, but is not limited thereto, and can be applied to systems for various uses. For example, the route determination device 30 can also be applied to a system that performs collection and delivery of package, visit sales, visit repair service, and the like using an EV. In short, the route determination device 30 of the present disclosure is only required to be a device that, when receiving a travel request that includes one or more destinations and requests traveling of the electric vehicle passing through the destination, determines the route of the EV passing through the destination included in the travel request and the one or more charging stations 10 based on the trust scores of the charging stations 10.

### (7) Modification 7

For example, when a degree of power supply-demand tightness of the area including the charging station 10 on the determined shortest route is equal to or greater than the reference value, the above-described second route determination unit 340 can determine the shortest route passing through the charging station 10 included in the area where the degree of power supply -demand tightness is less than the reference value among the areas adjacent to the area.

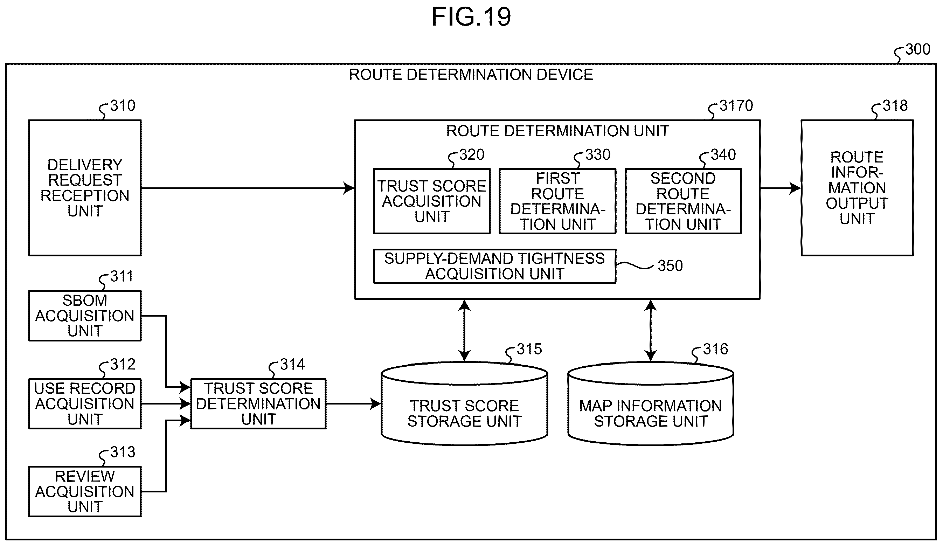

FIG. 19 is a diagram illustrating an example of functions of a route determination device 300 according to the present modification. As illustrated in FIG. 19, a route determination unit 3170 is different from the above-described embodiment in further including a supply-demand tightness acquisition unit 350. The supply-demand tightness acquisition unit 350 acquires the degree of power supply-demand tightness for each area. The acquisition destination of the degree of power supply-demand tightness may be an external device or a server. Further, the supply-demand tightness acquisition unit 350 may acquire information (information indicating power of system, power of demand, and the like) necessary for calculating the degree of power supply-demand tightness from the outside and calculate the degree of power supply-demand tightness for each area based on the acquired information.

After determining the shortest route by a method similar to the above-described embodiment, the second route determination unit 340 can acquire the degree of power supply-demand tightness of the area including the charging station 10 on the shortest route passing through the supply-demand tightness acquisition unit 350. When the degree of power supply-demand tightness in the area including the charging station 10 on the shortest route is equal to or greater than the reference value, the second route determination unit 340 refers to the degree of power supply-demand tightness in each area acquired by the supply-demand tightness acquisition unit 350 and selects an area having the degree of power supply-demand tightness less than the reference value from among the areas (surrounding areas) adjacent to the area including the charging station 10 on the shortest route.

Then, with the map information stored in the map information storage unit 316, the second route determination unit 340 specifies one or more routes of the EV from departure from the warehouse to return to the warehouse passing through the delivery destination included in the delivery request received by the delivery request reception unit 310 and one or more charging stations 10 included in the area (selected area) where the degree of power supply-demand tightness is less than the reference value, and determines a route having the shortest travel distance from among the one or more routes specified. The first route determination unit 330 determines the route of the EV with reference to the shortest route determined by the second route determination unit 340 and based on the trust score of one or more charging stations 10 included in the charging station trust score information acquired by the trust score acquisition unit 320 and included in the area where the degree of power supply-demand tightness is less than the reference value. A specific determining method is similar to that of the above-described embodiment. Furthermore, for example, the charging station trust score information in the present modification can be information in which information indicating the trust score and information indicating the area are associated for each charging station 10.

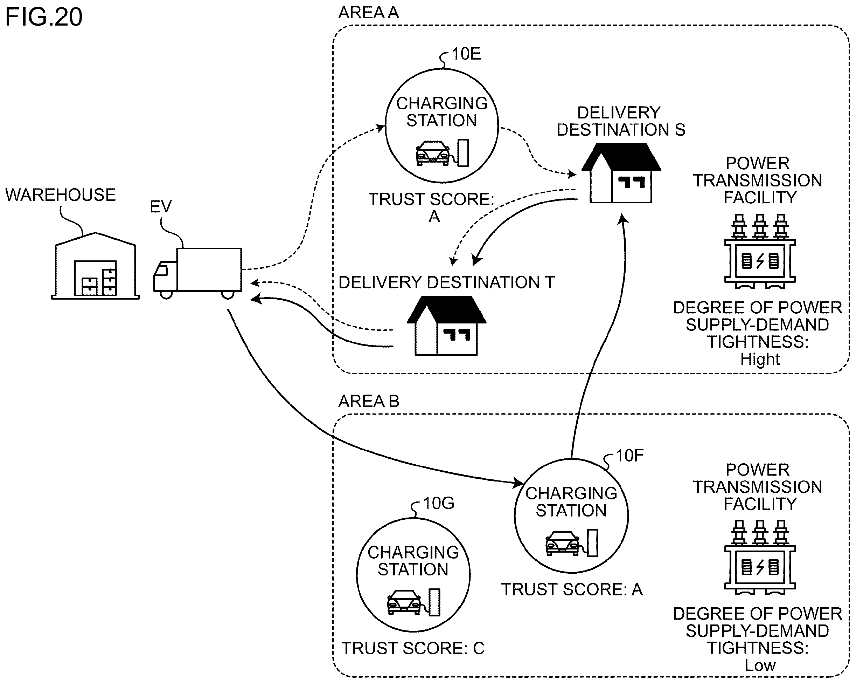

For example, as indicated by a dotted line in FIG. 20, it is assumed that the shortest route determined by the second route determination unit 340 is from the warehouse, to the charging station 10E (the rank of the trust score "A"), to a delivery destination S, to a delivery destination T, and to the warehouse. In this example, it is assumed that the degree of power supply-demand tightness in an area A including the charging station 10E is greater than or equal to the reference value. Therefore, the second route determination unit 340 refers to the degree of power supply-demand tightness for each area acquired by the supply-demand tightness acquisition unit 350 and selects an area B adjacent to the area A and having the degree of power supply-demand tightness less than the reference value. Then, the second route determination unit 340 determines the shortest route from among one or more routes of the EV until returning to the warehouse via the delivery destinations S and T and the charging station 10 included in the area B. Here, as indicated by a solid line in FIG. 20, it is assumed that the shortest route determined by the second route determination unit 340 is from the warehouse, to the charging station 10F (the rank of the trust score "A"), to the delivery destination S, to the delivery destination T, and to the warehouse. In this example, the rank of the trust score of the charging station 10F on the shortest route is "A" (the trust score is equal to or higher than the threshold value), and there is no need to replace the charging station with the adjacent charging station 10 having the higher trust score. Therefore, the first route determination unit 330 can determine the shortest route determined by the second route determination unit 340 as the route of the EV.

Here, for example, when the trust score of the charging station 10F is less than the threshold value (for example, when the rank of the trust score is "C"), and the charging station 10 having the trust score equal to or higher than the threshold value exists within the predetermined distance of the charging station 10F, the first route determination unit 330 can determine the route of the EV such that the EV passes through the charging station 10 having the trust score equal to or higher than the threshold value instead of the charging station 10F. A route determination method is similar to that of the above-described embodiment.

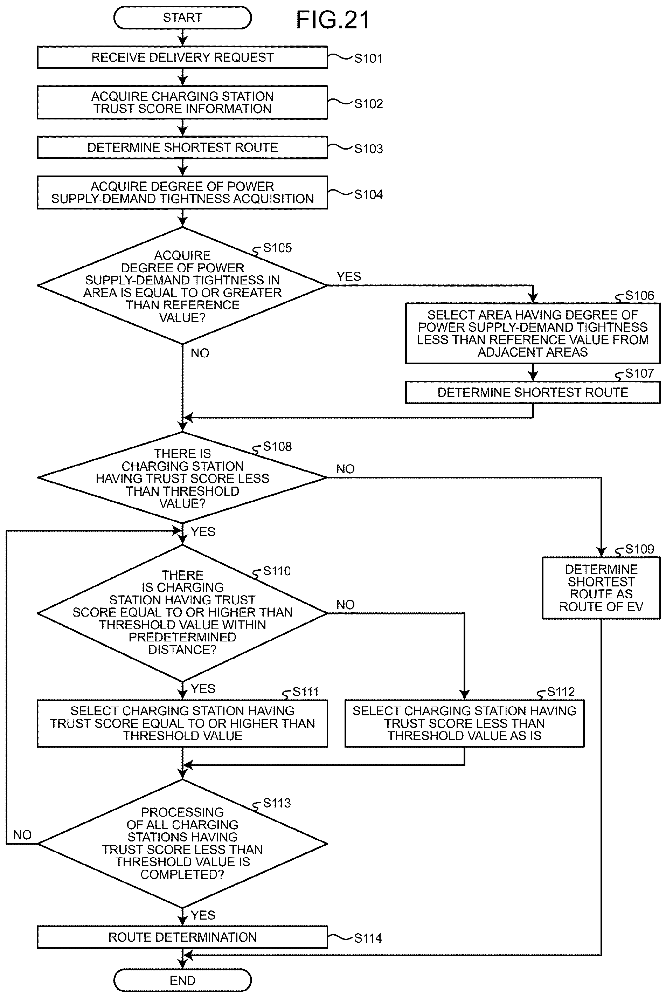

FIG. 21 is a flowchart illustrating an operation example of the route determination device 300 according to the present modification. As illustrated in FIG. 21, first, the delivery request reception unit 310 receives the delivery request (step S101). Next, the trust score acquisition unit 320 acquires the charging station trust score information from the trust score storage unit 315 (step S102). Next, the second route determination unit 340 uses the delivery request acquired in Step S101 and the map information stored in the map information storage unit 316 to determine the shortest route of the EV passing through the delivery destination included in the delivery request and one or more charging stations 10 (Step S103). The contents of the processing in steps S101 to S103 in FIG. 21 are the same as the contents of the processing in steps S1 to S3 in FIG. 17.

Next, the supply-demand tightness acquisition unit 350 acquires the degree of power supply-demand tightness for each area (step S104). Next, the second route determination unit 340 determines whether the degree of power supply-demand tightness in the area including the charging station 10 on the shortest route determined in step S103 is equal to or greater than the reference value (step S105).

When the result of step S105 is affirmative (step S105: Yes), the second route determination unit 340 selects an area where the degree of power supply-demand tightness is less than the reference value from the adjacent areas (step S106). Then, the second route determination unit 340 determines the shortest route from among one or more routes of the EV until returning to the warehouse via the delivery destination specified from the delivery request received in step S101 and the charging station 10 included in the area selected in step S106 (step S107). Then, the processing proceeds to step S108.

Meanwhile, if the result of step S105 described above is negative (step S105: No), the second route determination unit 340 does not determine the shortest route again, and the processing proceeds to step S108. The contents of the subsequent processing in steps S108 to S114 are the same as the contents of the processing in steps S4 to S10 in FIG. 17. In short, similarly to the above-described embodiment, when the charging station 10 having the trust score less than the threshold value exists on the shortest route, and the charging station 10 having the trust score equal to or higher than the threshold value exists within the predetermined distance of the charging station 10, the route determination device 300 determines the route of the EV so as to pass through the charging station 10 (the second charging station) having the trust score higher than or equal to the threshold value instead of the charging station 10 (the first charging station) having the trust score lower than the threshold value.

The above-described embodiment can be arbitrarily combined with the above-described modifications, or the above-described modifications may be arbitrarily combined.

### EXPLANATIONS OF LETTERS OR NUMERALS

- 1: DELIVERY SYSTEM
- 10: CHARGING STATION
- 20: CHARGING STATION MANAGEMENT SERVER
- 30: ROUTE DETERMINATION DEVICE
- 35: EV MANAGEMENT SERVER
- 40: NETWORK
- 50: TERMINAL
- 100: EV CHARGER
- 110: POWER METER
- 120: CHARGING STATION CONTROL DEVICE
- 130: NETWORK SWITCH
- 310: DELIVERY REQUEST RECEPTION UNIT
- 311: SBOM ACQUISITION UNIT
- 312: USE RECORD ACQUISITION UNIT
- 313: REVIEW ACQUISITION UNIT
- 314: TRUST SCORE DETERMINATION UNIT
- 315: TRUST SCORE STORAGE UNIT
- 316: MAP INFORMATION STORAGE UNIT
- 317: ROUTE DETERMINATION UNIT
- 318: ROUTE INFORMATION OUTPUT UNIT
- 320: TRUST SCORE ACQUISITION UNIT
- 330: FIRST ROUTE DETERMINATION UNIT
- 340: SECOND ROUTE DETERMINATION UNIT

## Claims

1. A route determination method comprising:
a travel request reception step of receiving a travel request for requesting a travel of an electric vehicle, the travel including one or more destinations and passing through the one or more destinations;
a trust score acquisition step of acquiring trust scores of a plurality of charging stations that are facilities configured to charge the electric vehicle from a trust score storage unit storing the trust scores of the plurality of charging stations;
a first route determination step of determining a route of the electric vehicle passing through the one or more destinations included in the travel request and one or more of the charging stations based on the trust score acquired in the trust score acquisition step, when the travel request is received in the travel request reception step; and
a route information output step of outputting route information indicating the route of the electric vehicle, the route determined in the first route determination step.

2. The route determination method according to claim 1,
wherein the first route determination step determines the route of the electric vehicle by preferentially selecting the charging station for which the trust score is higher from among candidates of the plurality of charging stations.

3. The route determination method according to claim 2, further comprising:
a second route determination step of determining a shortest route of the electric vehicle passing through the one or more destinations in the travel request and one or more of the charging stations,
wherein the first route determination step determines the route of the electric vehicle with reference to the shortest route determined in the second route determination step and based on the trust score acquired in the trust score acquisition step.

4. The route determination method according to claim 3,
wherein the second route determination step determines the shortest route of the electric vehicle according to a charging amount of the used electric vehicle.

5. The route determination method according to claim 3,
wherein when a first charging station indicating the charging station having the trust score less than a threshold value exists on the shortest route determined in the second route determination step, and a second charging station indicating the charging station having the trust score equal to or higher than the threshold value exists within a predetermined distance of the first charging station, the first route determination step determines the route of the electric vehicle to pass through the second charging station instead of the first charging station.

6. The route determination method according to claim 1,
wherein the first route determination step determines a charging amount to the electric vehicle in the charging station based on a position of the charging station on the determined route of the electric vehicle.

7. The route determination method according to claim 1,
wherein the travel request includes a delivery request for requesting delivery of a package by the electric vehicle.

8. The route determination method according to claim 1, further comprising:
a trust score determination step of determining the trust scores,
wherein the trust score determination step determines the trust scores according to evaluations of the charging stations.

9. The route determination method according to claim 8, wherein
the evaluation includes an evaluation based on software configuration information of each of a plurality of devices included in the charging station, and
the evaluation based on the software configuration information includes at least one of an evaluation regarding a risk, an evaluation regarding vulnerability, and an evaluation regarding a license.

10. The route determination method according to claim 9,
wherein the software configuration information is an SBOM.

11. The route determination method according to claim 10,
wherein the trust score determination step obtains at least one of the evaluation regarding the risk, the evaluation regarding the vulnerability, and the evaluation regarding the license based on the SBOM and determines the trust score according to the obtained evaluation.

12. The route determination method according to claim 8, wherein
the evaluation includes an evaluation regarding charging time and an evaluation regarding standby time of the charging station, and
the trust score determination step determines the trust score such that
the smaller a difference between actual charging time and a predetermined charging time in the charging station, the higher the evaluation regarding the charging time of the charging station, and the higher the trust score, and
the smaller a difference between actual standby time and a predetermined standby time in the charging station, the higher the evaluation regarding standby time of the charging station, and the higher the trust score.

13. The route determination method according to claim 8, wherein
the evaluation includes an evaluation based on a review of a user, and
the trust score determination step determines the trust score such that the higher the evaluation based on the review of the user, the higher the trust score.

14. The route determination method according to claim 8, wherein
the evaluation is an evaluation regarding a degree of crowding of the charging station, and
the trust score determination step determines the trust score such that the higher the degree of crowding of the charging station, the lower the evaluation regarding a degree of crowding of the charging station, and the lower the trust score.

15. The route determination method according to claim 3, further comprising:
a supply-demand tightness acquisition step of acquiring a degree of tightness for each area,
wherein, when the degree of power supply-demand tightness in an area including the charging station on the determined shortest route is equal to or greater than a reference value, the second route determination step determines the shortest route passing through the charging station included in an area having the degree of power supply-demand tightness less than the reference value from among areas adjacent to the area.

16. A route determination device comprising:
a travel request reception unit configured to receive a travel request for requesting a travel of an electric vehicle, the travel including one or more destinations and passing through the one or more destinations;
a trust score acquisition unit configured to acquire trust scores of a plurality of charging stations that are facilities configured to charge the electric vehicle from a trust score storage unit storing the trust scores of the plurality of charging stations;
a first route determination unit configured to determine a route of the electric vehicle passing through the one or more destinations included in the travel request and one or more of the charging stations based on the trust score acquired by the trust score acquisition unit, when the travel request is received by the travel request reception unit; and
a route information output unit configured to output route information indicating the route of the electric vehicle, the route determined by the first route determination unit.

17. A program causing a computer to perform:
a travel request reception step of receiving a travel request for requesting a travel of an electric vehicle, the travel including one or more destinations and passing through the one or more destinations;
a trust score acquisition step of acquiring trust scores of a plurality of charging stations that are facilities configured to charge the electric vehicle from a trust score storage unit storing the trust scores of the plurality of charging stations;
a first route determination step of determining a route of the electric vehicle passing through the one or more destinations included in the travel request and one or more of the charging stations based on the trust score acquired in the trust score acquisition step, when the travel request is received in the travel request reception step; and
a route information output step of outputting route information indicating the route of the electric vehicle, the route determined in the first route determination step.
